# EUROPEAN PATENT APPLICATION

(11) **EP 3 823 148 A1**
(43) Date of publication of application: **19.05.2021**
(21) Application number: 19856842.0
(22) Date of filing: 28.08.2019
(51) Int. Cl.: H02M 3/28, H02J 1/10

(54) **UNIDIRECTIONAL DC VOLTAGE CONVERSION DEVICE AND SYSTEM AND METHOD FOR CONTROLLING SAME**

(30) Priority: 06.09.2018 CN 201811035150
(71) Applicant: NR ELECTRIC CO., LTD., Jiangning Nanjing, Jiangsu 211102 (CN); NR Engineering Co., Ltd., Nanjing, Jiangsu 211102 (CN)
(72) Inventor: XIE, Yeyuan, Nanjing, Jiangsu 211102 (CN); TIAN, Jie, Nanjing, Jiangsu 211102 (CN); ZHANG, Zhongfeng, Nanjing, Jiangsu 211102 (CN); YANG, Chen, Nanjing, Jiangsu 211102 (CN); LI, Haiying, Nanjing, Jiangsu 211102 (CN); CAO, Dongming, Nanjing, Jiangsu 211102 (CN); WANG, Yu, Nanjing, Jiangsu 211102 (CN)
(74) Representative: Kurig, Thomas
(86) International application number: PCT/CN2019/103033
(87) International publication number: WO 2020/048362

(57) **Abstract**

A unidirectional DC voltage conversion device and system and a method for controlling the same. The unidirectional DC voltage conversion device comprises a front end circuit (2), a main power circuit (1), a preceding-stage auxiliary isolation switch (5), and a subsequent-stage auxiliary isolation switch (6). A preceding-stage port of the main power circuit (1) and a subsequent-stage port of the front end circuit (2) form a cascade connection. The preceding-stage auxiliary isolation switch (5) is connected to a negative terminal (8) of a preceding-stage port of the front end circuit (2), and forms, together with a positive terminal (7) of the preceding-stage port of the front end circuit (2), a first input port of the unidirectional DC voltage conversion device. The subsequent-stage auxiliary isolation switch (6) is connected to a negative terminal (10) of a subsequent-stage port of the main power circuit (1), and forms, together with a positive terminal (9) of the subsequent-stage port of the main power circuit (1), a first output port of the unidirectional DC voltage conversion device.

## Description

### Technical Field

The present application relates to the technical field of power electronic application, in particular to a unidirectional DC voltage conversion device and system and a method for controlling the same.

### Background

DC voltage conversion devices, as an important component for realizing voltage conversion in a DC power grid, have gained more and more attention from scholars in the field of DC power grids. In order to realize the power conversion from medium/low voltage to high voltage DC buses, it is suggested to use multiple isolated DC voltage conversion devices considering the stress and cost of switching tube elements. Each device is regarded as a subunit, and all the devices are applied to the occasions with higher voltage levels and higher power levels after their high-voltage ports are connected in series and low-voltage ports are connected in parallel (ISOP or IPOS structure). Therefore, the DC voltage conversion device based on a double active bridge (DAB) circuit is the most common isolated DC voltage conversion device at present.

A bidirectional DC voltage conversion device is provided with a DAB circuit, which can be simplified to reduce the system cost in the case of unidirectional power transmission. A fully-controlled H-bridge inverter circuit composed of switching elements is arranged on an inverter side, and a diode full-bridge uncontrolled rectifier circuit is arranged on a rectifier side, which is also called phase-shifted full-bridge circuit structure. After simplification, the drive control of fully-controlled H-bridge inverter circuits on both sides of the original DAB circuit is simplified, which can avoid the synchronized driving problem of the fully-controlled H-bridge inverter circuits on both sides; meanwhile, switching tubes are replaced with diodes, which also reduces the cost of the device.

With the development of DC grid-connected demands in the fields such as photovoltaic new energy, in order to reduce the line loss and realize longer transmission distances and higher transmission capacity of photovoltaic power generation, the voltage level of the system has been continuously improved. However, the voltage tolerance of a single element is limited. In order to meet higher voltage level demands, more sub-modules connected in series need to be configured on a high voltage side of the DC voltage conversion device in the prior art, which will not only reduce the reliability of the system and increase the cost of the system, but also make the control strategy of the system more complex.

In addition, for some specific applications, such as using a unidirectional DC voltage conversion device to de-ice DC lines, the length of de-iced lines is uncertain, and the equivalent load resistance is uncertain, which requires a wider working range of the device. Therefore, there is a need for a more versatile DC voltage conversion device, which can satisfy the need for a wider working range without increasing too much cost.

### Summary

The embodiments of the present application provide a unidirectional DC voltage conversion device, comprising a front end circuit, a main power circuit, a preceding-stage auxiliary isolation switch, and a subsequent-stage auxiliary isolation switch. A preceding-stage port of the main power circuit and a subsequent-stage port of the front end circuit form a cascade connection. The preceding-stage auxiliary isolation switch is connected to a negative terminal of a preceding-stage port of the front end circuit, and forms, together with a positive terminal of the preceding-stage port of the front end circuit, a first input port of the unidirectional DC voltage conversion device. The subsequent-stage auxiliary isolation switch is connected to a negative terminal of a subsequent-stage port of the main power circuit, and forms, together with a positive terminal of the subsequent-stage port of the main power circuit, a first output port of the unidirectional DC voltage conversion device.

According to some embodiments, the device further comprises a preceding-stage switch circuit and a subsequent-stage switch circuit, wherein a preceding-stage port of the preceding-stage switch circuit is a second input port of the unidirectional DC voltage conversion device and comprises an input positive terminal and an input negative terminal, a subsequent-stage port of the preceding-stage switch circuit and the preceding-stage port of the front end circuit form a cascade connection, a preceding-stage port of the subsequent-stage switch circuit and the subsequent-stage port of the main power circuit form a cascade connection, and a subsequent-stage port of the subsequent-stage switch circuit is a second output port of the unidirectional DC voltage conversion device and comprises an output positive terminal and an output negative terminal.

According to some embodiments, the preceding-stage switch circuit comprises a preceding-stage bypass switch, a preceding-stage positive isolation switch and a preceding-stage negative isolation switch. Two ends of the preceding-stage bypass switch form the subsequent-stage port of the preceding-stage switch circuit. One end of the preceding-stage positive isolation switch is connected to one end of the preceding-stage bypass switch. One end of the preceding-stage negative isolation switch is connected to the other end of the preceding-stage bypass switch. The other end of the preceding-stage positive isolation switch and the other end of the preceding-stage negative isolation switch form the preceding-stage port of the preceding-stage switch circuit.

According to some embodiments, the subsequent-stage switch circuit comprises a subsequent-stage bypass switch, a subsequent-stage positive isolation switch and a subsequent-stage negative isolation switch. Two ends of the subsequent-stage bypass switch form the preceding-stage port of the subsequent-stage switch circuit. One end of the subsequent-stage positive isolation switch is connected to one end of the subsequent-stage bypass switch. One end of the subsequent-stage negative isolation switch is connected to the other end of the subsequent-stage bypass switch. The other end of the subsequent-stage positive isolation switch and the other end of the subsequent-stage negative isolation switch form the subsequent-stage port of the subsequent-stage switch circuit.

According to some embodiments, the main power circuit comprises a high-frequency transformer, a fully-controlled H-bridge circuit, a resonant part, an uncontrolled H-bridge circuit, an input capacitor and an output capacitor. The high-frequency transformer comprises a primary winding and a secondary winding. An AC side of the fully-controlled H-bridge circuit is connected to the primary winding of the high-frequency transformer. The fully-controlled H-bridge circuit comprises a first half-bridge and a second half-bridge, and a bridge arm of each half-bridge comprises a fully-controlled switching element. The resonant part is connected in series to the primary winding or the secondary winding of the high-frequency transformer. An AC side of the uncontrolled H-bridge circuit is connected to the secondary winding of the high-frequency transformer. The uncontrolled H-bridge circuit comprises a third half-bridge and a fourth half-bridge, wherein an upper bridge arm and a lower bridge arm of each half-bridge comprise M diodes connected in series, and M is any positive integer greater than or equal to 2. The input capacitor is connected in parallel to a DC side of the fully-controlled H-bridge circuit to form the preceding-stage port of the main power circuit. The output capacitor is connected in parallel to a DC side of the uncontrolled H-bridge circuit to form the subsequent-stage port of the main power circuit.

According to some embodiments, the front end circuit comprises a full-bridge circuit, a bypass isolation switch and a bus capacitor. The full-bridge circuit comprises four fully-controlled switching elements. The bypass isolation switch is connected in parallel to an AC side of the full-bridge circuit to form the preceding-stage port of the front end circuit. The bus capacitor is connected in parallel to a DC side of the full-bridge circuit to form the subsequent-stage port of the front end circuit.

According to some embodiments, the front end circuit comprises a half-bridge circuit, a bypass isolation switch and a bus capacitor. The half-bridge circuit comprises two fully-controlled switching elements. The bypass isolation switch is connected in parallel between a middle point and a negative terminal of the half-bridge circuit to form the preceding-stage port of the front end circuit. The bus capacitor is connected in parallel between a positive terminal and a negative terminal of the half-bridge circuit to form the subsequent-stage port of the front end circuit.

According to some embodiments, the unidirectional DC voltage conversion device further comprises a fuse and an isolation switch connected in series, wherein the fuse and the isolation switch are connected in series between a positive terminal of the preceding-stage port and a positive terminal of the subsequent-stage port of the front end circuit, and a negative terminal of the preceding-stage port and a negative terminal of the subsequent-stage port of the front end circuit are directly connected by wires.

The embodiments of the present application also provide a method for controlling the unidirectional DC voltage conversion device as described above. The method comprises: during normal operation, adopting the following first driving pulse control method to control the fully-controlled H-bridge circuit of the main power circuit of the unidirectional DC voltage conversion device: controlling the driving pulses of the fully-controlled switching elements of the upper bridge arms and the lower bridge arms of the first half-bridge and the second half-bridge to be in a complementary conduction state, and the driving pulse duty ratios D of the fully-controlled switching elements of the upper bridge arms of the first half-bridge and the second half-bridge to be the same with an interleaving angle of 180°, wherein D is a controlled variable with a variation range of 0-1.

The embodiments of the present application also provide a method for controlling the unidirectional DC voltage conversion device as described above. The method comprises: during normal operation, adopting the following second driving pulse control method to control the fully-controlled H-bridge circuit of the main power circuit of the unidirectional DC voltage conversion device: controlling the driving pulses of the fully-controlled switching elements of the upper bridge arms and the lower bridge arms of the first half-bridge and the second half-bridge to be in a complementary conduction state, and the driving pulse duty ratios of the fully-controlled switching elements of the upper bridge arms of the first half-bridge and the second half-bridge to both stay constant at 0.5 with an interleaving angle of θ, wherein the interleaving angle θ is a phase shift angle, and θ is a controlled variable with a variation range of 0-180°.

The embodiments of the present application also provide a unidirectional DC voltage conversion system, comprising N unidirectional DC voltage conversion devices as described above, wherein N is any positive integer greater than or equal to 2, the second input ports of all the unidirectional DC voltage conversion devices are all connected in parallel, and the second output ports of all the unidirectional DC voltage conversion devices are all connected in parallel; the first input ports of all the unidirectional DC voltage conversion devices are sequentially connected in series, a negative terminal of the first input port of each device is connected to a positive terminal of the first input port of the next adjacent device, and a positive terminal of the first device and a negative terminal of the Nth device are suspended; and the first output ports of all the unidirectional DC voltage conversion devices are sequentially connected in series, a negative terminal of the first output port of each device is connected to a positive terminal of the first output port of the next adjacent device, and a positive terminal of the first device and a negative terminal of the Nth device are suspended.

The embodiments of the present application also provide a method for controlling the unidirectional DC voltage conversion system as described above. The method comprises: adopting a driving pulse interleaving control mechanism to sequentially interleave the driving pulses of the fully-controlled switching elements corresponding to the first half-bridges of each unidirectional DC voltage conversion device by 360°/N.

According to some embodiments, the method for controlling the unidirectional DC voltage conversion system further comprises: when the unidirectional DC voltage conversion device has a short-term fault, locking the pulse drive of four fully-controlled switching elements of the fully-controlled H-bridge circuit of the unidirectional DC voltage conversion device at the same time for fault isolation; and after the fault is eliminated, unlocking the pulse drive of the four fully-controlled switching elements of the fully-controlled H-bridge circuit to realize fault ride-through.

According to some embodiments, the method for controlling the unidirectional DC voltage conversion system further comprises: when the unidirectional DC voltage conversion device has a permanent fault, locking the pulse drive of four fully-controlled switching elements of the fully-controlled H-bridge circuit of the unidirectional DC voltage conversion device at the same time for fault isolation; and if the fault cannot be eliminated, changing the working state of the preceding-stage switch circuit and the subsequent-stage switch circuit to realize permanent fault isolation.

The embodiments of the present application provide a unidirectional DC voltage conversion device, comprising two input ports and two output ports and consisting of a preceding-stage switch circuit, a front end circuit, a main power circuit, a subsequent-stage switch circuit, a preceding-stage auxiliary isolation switch and a subsequent-stage auxiliary isolation switch. The preceding-stage switch circuit, the front end circuit, the main power circuit and the subsequent-stage switch circuit are all two-port circuits, and the preceding-stage and subsequent-stage ports of the circuits form a cascade connection in sequence. A preceding-stage port of the preceding-stage switch circuit is a second input port of the unidirectional DC voltage conversion device, and comprises an input positive terminal and an input negative terminal. A subsequent-stage port of the subsequent-stage switch circuit is a second output port of the unidirectional DC voltage conversion device, and comprises an output positive terminal and an output negative terminal. When a subsequent stage of the preceding-stage switch circuit and a preceding stage of the front end circuit form a cascade connection, a negative terminal of the port is connected to the preceding-stage auxiliary isolation switch and forms, together with a positive terminal, a first input port of the unidirectional DC voltage conversion device. When a subsequent stage of the main power circuit and a preceding stage of the subsequent-stage switch circuit form a cascade connection, a negative terminal of the port is connected to the subsequent-stage auxiliary isolation switch and forms, together with a positive terminal, a first output port of the unidirectional DC voltage conversion device.

According to some embodiments, the main power circuit of the unidirectional DC voltage conversion device comprises a fully-controlled H-bridge circuit, a high-frequency transformer, a resonant part, an uncontrolled H-bridge circuit, an input capacitor and an output capacitor. The high-frequency transformer comprises two windings, which are defined as a primary winding and a secondary winding. The resonant part is connected in series to any winding of the high-frequency transformer. The fully-controlled H-bridge circuit comprises two half-bridges, which are defined as a first half-bridge and a second half-bridge, and a bridge arm of each half-bridge is composed of a fully-controlled switching element. The uncontrolled H-bridge circuit also comprises two half-bridges, which are defined as a third half-bridge and a fourth half-bridge, wherein an upper bridge arm and a lower bridge arm of each half-bridge are each composed of M diodes connected in series, and M is any positive integer greater than or equal to 2. A DC side of the fully-controlled H-bridge circuit is connected to the input capacitor in parallel to form a preceding-stage port of the main power circuit, and an AC side of the fully-controlled H-bridge circuit is connected to the primary winding of the high-frequency transformer. An AC side of the uncontrolled H-bridge circuit is connected to the secondary winding of the high-frequency transformer, and a DC side of the uncontrolled H-bridge circuit is connected to the output capacitor in parallel to form a subsequent-stage port of the main power circuit.

According to some embodiments, the preceding-stage switch circuit of the unidirectional DC voltage conversion device comprises three isolation switches, namely a positive isolation switch, a negative isolation switch and a bypass switch. Two ends of the bypass switch form a subsequent-stage port of the preceding-stage switch circuit of the unidirectional DC voltage conversion device, one end of the positive isolation switch and one end of the negative isolation switch are respectively connected to two ends of the bypass switch, and the other end of the positive isolation switch and the other end of the negative isolation switch form the preceding-stage port of the preceding-stage switch circuit of the unidirectional DC voltage conversion device.

According to some embodiments, the subsequent-stage switch circuit of the unidirectional DC voltage conversion device comprises three isolation switches, namely a positive isolation switch, a negative isolation switch and a bypass switch. Two ends of the bypass switch form a preceding-stage port of the subsequent-stage switch circuit of the unidirectional DC voltage conversion device, one end of the positive isolation switch and one end of the negative isolation switch are respectively connected to two ends of the bypass switch, and the other end of the positive isolation switch and the other end of the negative isolation switch form the subsequent-stage port of the subsequent-stage switch circuit of the unidirectional DC voltage conversion device.

According to some embodiments, the front end circuit of the unidirectional DC voltage conversion device is composed of a full-bridge circuit. The full-bridge circuit consists of four fully-controlled switching elements. An AC side of the full-bridge circuit is connected in parallel to a bypass isolation switch to form a preceding-stage port of the front end circuit of the unidirectional DC voltage conversion device. A DC side of the full-bridge circuit is connected in parallel to a bus capacitor to form a subsequent-stage port of the front end circuit of the unidirectional DC voltage conversion device.

According to some embodiments, the front end circuit of the unidirectional DC voltage conversion device is composed of a half-bridge circuit. The half-bridge circuit consists of two fully-controlled switching elements. A bypass isolation switch is connected in parallel between a middle point and a negative terminal of the half-bridge circuit to form a preceding-stage port of the front end circuit of the unidirectional DC voltage conversion device. A bus capacitor is connected in parallel between a positive terminal and a negative terminal of the half-bridge circuit to form a subsequent-stage port of the front end circuit of the unidirectional DC voltage conversion device.

According to some embodiments, a fuse and an isolation switch are connected in series between a positive terminal of the preceding-stage port and a positive terminal of the subsequent-stage port of the front end circuit of the unidirectional DC voltage conversion device, and a negative terminal of the preceding-stage port and a negative terminal of the subsequent-stage port are directly connected by wires.

The embodiments of the present application also provide a method for controlling the unidirectional DC voltage conversion device as described above. During normal operation, a fully-controlled H-bridge circuit of a subunit of the unidirectional DC voltage conversion device adopts the following driving pulse control method: controlling the driving pulses of upper and lower switching tubes of the first half-bridge and the second half-bridge to be in a complementary conduction state, and the driving pulse duty ratios of the upper tubes of the first half-bridge and the second half-bridge to be the same with an interleaving angle of 180°, wherein the duty ratios of the two upper tubes are defined as D which is a controlled variable with a variation range of 0-1. The driving pulse control method is defined as a first drive control method.

The embodiments of the present application also provide a method for controlling the unidirectional DC voltage conversion device as described above. During normal operation, a fully-controlled H-bridge inverter circuit of a subunit of the unidirectional DC voltage conversion device adopts the following driving pulse control method: controlling the driving pulses of upper and lower switching tubes of the first half-bridge and the second half-bridge to be in a complementary conduction state, and the driving pulse duty ratios of the upper tubes of the first half-bridge and the second half-bridge to be the same with an interleaving angle θ, wherein the duty ratios of the two upper tubes stay constant at 0.5, and the interleaving angle θ is defined as a phase shift angle which is a controlled variable with a variation range of 0-180°. The driving pulse control method is defined as a second drive control method.

The embodiments of the present application also provide a unidirectional DC voltage conversion system, comprising N unidirectional DC voltage conversion devices as described above, wherein N is any positive integer greater than or equal to 2. All the unidirectional DC voltage conversion devices are connected as follows: the second input ports of all the unidirectional DC voltage conversion devices are all connected in parallel, and the second output ports of all the unidirectional DC voltage conversion devices are all connected in parallel; the first input ports of all the unidirectional DC voltage conversion devices are sequentially connected in series, that is, a negative terminal of the first input port of a first device is connected to a positive terminal of the first input port of a second device, and so on, and a positive terminal of the first device and a negative terminal of the Nth device are suspended; and the first output ports of all the unidirectional DC voltage conversion devices are sequentially connected in series, that is, a negative terminal of the first output port of the first device is connected to a positive terminal of the first output port of the second device, and so on, and a positive terminal of the first device and a negative terminal of the Nth device are suspended.

The embodiments of the present application also provide a method for controlling the unidirectional DC voltage conversion system as described above. A driving pulse interleaving control mechanism is adopted, that is, sequentially interleaving the driving pulses of switching tubes corresponding to the first half-bridges of each unidirectional DC voltage conversion device by 360°/N.

The embodiments of the present application also provide a method for controlling the unidirectional DC voltage conversion system as described above. When the unidirectional DC voltage conversion device has a short-term fault, the following control procedure is adopted: detecting the working state of the unidirectional DC voltage conversion device in real time, and if a fault occurs, locking the pulse drive of four switching tubes of the fully-controlled H-bridge circuit of the unidirectional DC voltage conversion device at the same time for fault isolation; and after the fault is eliminated, unlocking the pulse drive of the four switching tubes of the fully-controlled H-bridge circuit to realize fault ride-through.

The embodiments of the present application also provide a method for controlling the unidirectional DC voltage conversion system as described above. When the unidirectional DC voltage conversion device has a permanent fault, the following control procedure is adopted: detecting the working state of the unidirectional DC voltage conversion device in real time, and if a fault occurs, locking the pulse drive of four switching tubes of the fully-controlled H-bridge circuit of the unidirectional DC voltage conversion device at the same time for fault isolation; and if the fault cannot be eliminated, changing the working state of the preceding-stage switch circuit and the subsequent-stage switch circuit to realize permanent fault isolation.

According to the technical scheme provided by the embodiments of the present application, the unidirectional DC voltage conversion device is provided with the front end circuit, the auxiliary isolation switches and other components, and when multiple devices are combined, switching between serial connection and parallel connection of the multiple devices can be freely realized without changing external wiring, so the requirement for a wider working range can be met without increasing too much cost.

### Brief Description of the Drawings

In order to explain the technical scheme in the embodiments of the present application more clearly, the drawings used in the description of the embodiments will be briefly introduced below. Obviously, the drawings in the following description are only for illustrating some embodiments of the present application, and for those of ordinary skill in the field, other drawings can be obtained according to these drawings without paying creative labor.
Fig. 1 is a structural block diagram of a unidirectional DC voltage conversion device disclosed in the present application;
Fig. 2 is a structural block diagram of another unidirectional DC voltage conversion device disclosed in the present application;
Fig. 3 is a structural block diagram of a preceding-stage switch circuit;
Fig. 4 is a structural block diagram of a subsequent-stage switch circuit;
Fig. 5 is a structural block diagram of a front end circuit based on a full-bridge circuit;
Fig. 6 is a structural block diagram of a front end circuit based on a half-bridge circuit;
Fig. 7 is a structural block diagram of a front end circuit based on the series connection of a fuse and an isolation switch;
Fig. 8 is a diagram of a switching tube driving waveform of a first driving control method scheme;
Fig. 9 is a diagram of a switching tube driving waveform of a second driving control method scheme;
Fig. 10 is a structural block diagram of a system composed of a plurality of unidirectional DC voltage conversion devices disclosed in the present application; and
Fig. 11 is a structural block diagram of a unidirectional DC voltage conversion system with two series and three parallel input ports and three series and two parallel output ports.

### Detailed Description of Embodiments

In order to make the purpose, technical scheme and advantages of the embodiments of the present application clearer, the specific implementations of the technical scheme of the present application will be described in more detail and clearly with reference to the drawings and embodiments. However, the specific implementations and embodiments described below are for the purpose of illustration only, and are not a limitation of the present application. They only cover some embodiments of the present application, but not all embodiments. Other embodiments obtained by those skilled in the art for various changes of the present application belong to the scope of protection of the present application.

It should be understood that the terms "first", "second", "third" and "fourth" in the claims, specification and drawings of the present application are used to distinguish different objects, but not to describe a specific order. As used in the specification and claims of the present application, the terms "comprise" and "include" indicate the presence of the described features, integers, steps, operations, elements and/or components, but do not exclude the presence or addition of one or more other features, integers, steps, operations, elements, components and/or groups thereof.

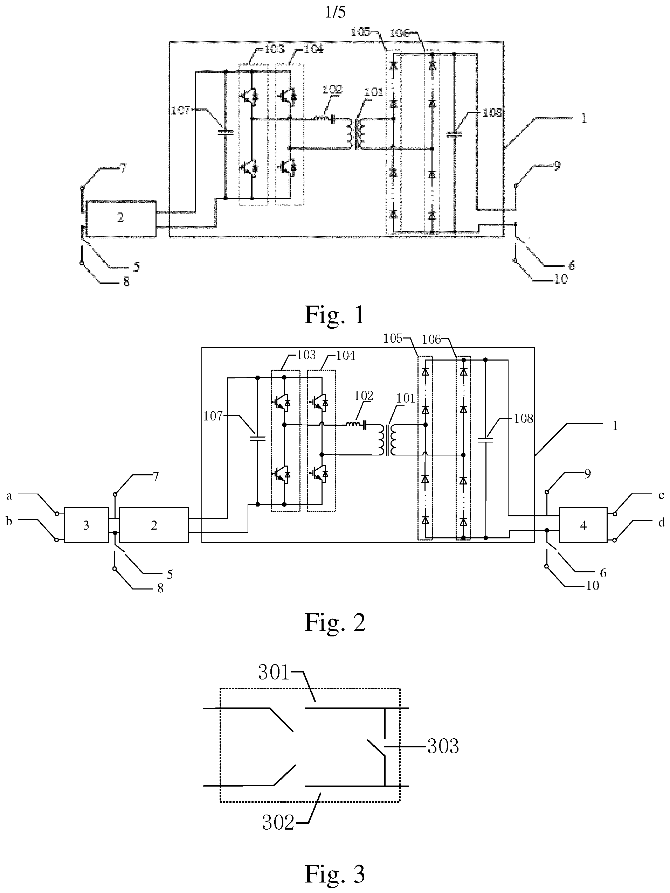

Fig. 1 is a structural block diagram of a unidirectional DC voltage conversion device disclosed in the present application.

As shown in Fig. 1, the unidirectional DC voltage conversion device comprises a front end circuit 2, a main power circuit 1, a preceding-stage auxiliary isolation switch 5 and a subsequent-stage auxiliary isolation switch 6. The front end circuit and the main power circuit are both two-port circuits, and a preceding-stage port of the main power circuit and a subsequent-stage port of the front end circuit form a cascade connection.

A component 7 represents a positive terminal of the cascade connection port of the front end circuit 2, and a negative terminal 8 of the port is connected to the preceding-stage auxiliary isolation switch 5 and forms, together with the positive terminal 7, a first input port of the unidirectional DC voltage conversion device. A negative terminal 10 of a subsequent-stage port of the main power circuit 1 is connected to the subsequent-stage auxiliary isolation switch 6 and forms, together with a positive terminal 9, a first output port of the unidirectional DC voltage conversion device.

As shown in Fig. 1, the main power circuit 1 of the unidirectional DC voltage conversion device comprises a fully-controlled H-bridge circuit, a high-frequency transformer 101, a resonant part 102, an uncontrolled H-bridge circuit, an input capacitor 107 and an output capacitor 108.

The high-frequency transformer 101 comprises two windings, which are defined as a primary winding and a secondary winding. The resonant part 102 is connected in series to any winding of the high-frequency transformer 101. The fully-controlled H-bridge circuit comprises two half-bridges, which are defined as a first half-bridge 103 and a second half-bridge 104, and a bridge arm of each half-bridge comprises a fully-controlled switching element. The uncontrolled H-bridge circuit also comprises two half-bridges, which are defined as a third half-bridge 105 and a fourth half-bridge 106, wherein an upper bridge arm and a lower bridge arm of each half-bridge each comprise M diodes connected in series, and M is any positive integer greater than or equal to 2.

A DC side of the fully-controlled H-bridge circuit is connected in parallel to the input capacitor 107 to form the preceding-stage port of the main power circuit 1, and an AC side of the fully-controlled H-bridge circuit is connected to the primary winding of the high-frequency transformer 101. An AC side of the uncontrolled H-bridge circuit is connected to the secondary winding of the high-frequency transformer 101, and a DC side of the uncontrolled H-bridge circuit is connected in parallel to the output capacitor 108 to form the subsequent-stage port of the main power circuit 1.

According to the technical scheme provided by the present embodiment, the unidirectional DC voltage conversion device is provided with the front end circuit, the auxiliary isolation switches and other components, and when multiple devices are combined, switching between serial connection and parallel connection of the multiple devices can be freely realized without changing external wiring, so the requirement for a wider working range can be met without increasing too much cost.

Fig. 2 is a structural block diagram of another unidirectional DC voltage conversion device disclosed in the present application.

As shown in Fig. 2, the unidirectional DC voltage conversion device comprises two input ports and two output ports, and is composed of a preceding-stage switch circuit 3, a front end circuit 2, a main power circuit 1, a subsequent-stage switch circuit 4, a preceding-stage auxiliary isolation switch 5 and a subsequent-stage auxiliary isolation switch 6, wherein the preceding-stage switch circuit, the front end circuit, the main power circuit and the subsequent-stage switch circuit are all two-port circuits, and the preceding-stage and subsequent-stage ports of all the circuit form a cascade connection according to the above sequence.

A preceding-stage port of the preceding-stage switch circuit 3 is a second input port of the unidirectional DC voltage conversion device, and comprises an input positive terminal a and an input negative terminal b; and a subsequent-stage port of the subsequent-stage switch circuit 4 is a second output port of the unidirectional DC voltage conversion device, and comprises an output positive terminal c and an output negative terminal d.

When a subsequent stage of the preceding-stage switch circuit 3 and a preceding stage of the front end circuit 2 form a cascade connection, a component 7 represents a positive terminal of the cascade connection port of the preceding-stage switch circuit 3 and the front end circuit 2, a negative terminal 8 of the port is connected to the preceding-stage auxiliary isolation switch 5 and forms, together with the positive terminal 7, a first input port of the unidirectional DC voltage conversion device; and when a subsequent stage of the main power circuit 1 and a preceding stage of the subsequent-stage switch circuit 4 form a cascade connection, a negative terminal 10 of the port is connected to the subsequent-stage auxiliary isolation switch 6 and forms, together with a positive terminal 9, a first output port of the unidirectional DC voltage conversion device.

As shown in Fig. 2, the main power circuit 1 of the unidirectional DC voltage conversion device comprises a fully-controlled H-bridge circuit, a high-frequency transformer 101, a resonant part 102, an uncontrolled H-bridge circuit, an input capacitor 107 and an output capacitor 108.

The high-frequency transformer 101 comprises two windings, which are defined as a primary winding and a secondary winding. The resonant part 102 is connected in series to any winding of the high-frequency transformer 101. The fully-controlled H-bridge circuit comprises two half-bridges, which are defined as a first half-bridge 103 and a second half-bridge 104, and a bridge arm of each half-bridge comprises a fully-controlled switching element. The uncontrolled H-bridge circuit also comprises two half-bridges, which are defined as a third half-bridge 105 and a fourth half-bridge 106, wherein an upper bridge arm and a lower bridge arm of each half-bridge each comprise M diodes connected in series, and M is any positive integer greater than or equal to 2.

A DC side of the fully-controlled H-bridge circuit is connected in parallel to the input capacitor 107 to form the preceding-stage port of the main power circuit 1, and an AC side of the fully-controlled H-bridge circuit is connected to the primary winding of the high-frequency transformer 101. An AC side of the uncontrolled H-bridge circuit is connected to the secondary winding of the high-frequency transformer 101, and a DC side of the uncontrolled H-bridge circuit is connected in parallel to the output capacitor 108 to form the subsequent-stage port of the main power circuit 1.

In the technical scheme provided in the present embodiment, as an improvement, the main power circuit of the unidirectional DC voltage conversion device is provided with the uncontrolled H-bridge circuit with diodes connected in series, and by connecting the elements in series, the voltage level of the output port can be significantly improved. Due to the improvement of the voltage level of the output port, when multiple devices are required to be connected in parallel and series combinations to realize high voltage levels and high power levels, the scheme of the present invention can greatly reduce the number of the unidirectional DC voltage conversion devices as subunits, improve the reliability of the system, reduce the cost of the system, and simplify the control strategy of the system.

Fig. 3 is a structural block diagram of a preceding-stage switch circuit.

As shown in Fig. 3, the preceding-stage switch circuit of the unidirectional DC voltage conversion device comprises a preceding-stage positive isolation switch 301, a preceding-stage negative isolation switch 302 and a preceding-stage bypass switch 303. Two ends of the preceding-stage bypass switch 303 form the subsequent-stage port of the preceding-stage switch circuit 3 of the unidirectional DC voltage conversion device. One end of the preceding-stage positive isolation switch 301 and one end of the preceding-stage negative isolation switch 302 are connected to the two ends of the preceding-stage bypass switch 303 respectively. The other end of the preceding-stage positive isolation switch 301 and the other end of the preceding-stage negative isolation switch 302 form the preceding-stage port of the preceding-stage switch circuit 3 of the unidirectional DC voltage conversion device.

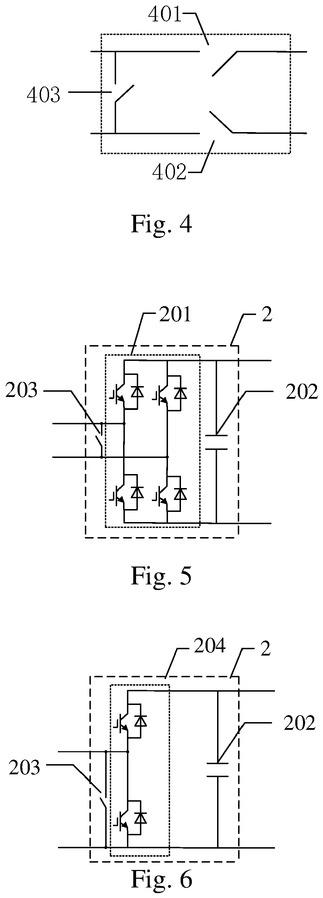

Fig. 4 is a structural block diagram of a subsequent-stage switch circuit.

As shown in Fig. 4 which is a structural diagram of the subsequent-stage switch circuit 4, component 401 is a positive isolation switch, component 402 is a negative isolation switch, and component 403 is a bypass switch.

Two ends of the subsequent-stage bypass switch 403 form the preceding-stage port of the subsequent-stage switch circuit 4. One end of the subsequent-stage positive isolation switch 401 is connected to one end of the subsequent-stage bypass switch 403. One end of the subsequent-stage negative isolation switch 402 is connected to the other end of the subsequent-stage bypass switch 403. The other end of the subsequent-stage positive isolation switch 401 and the other end of the subsequent-stage negative isolation switch 402 form the subsequent-stage port of the subsequent-stage switch circuit 4.

Fig. 5 is a structural block diagram of a front end circuit based on a full-bridge circuit.

As shown in Fig. 5, the front end circuit 2 of the unidirectional DC voltage conversion device comprises a full-bridge circuit 201. The full-bridge circuit 201 consists of four fully-controlled switching elements. An AC side of the full-bridge circuit is connected in parallel to a bypass isolation switch 203 to form a preceding-stage port of the front end circuit 2 of the unidirectional DC voltage conversion device. A DC side of the full-bridge circuit is connected in parallel to a bus capacitor 202 to form a subsequent-stage port of the front end circuit of the unidirectional DC voltage conversion device.

Fig. 6 is a structural block diagram of a front end circuit based on a half-bridge circuit.

As shown in Fig. 6, the front end circuit 2 of the unidirectional DC voltage conversion device comprises a half-bridge circuit 204. The half-bridge circuit 204 comprises two fully-controlled switching elements. A bypass isolation switch 203 is connected in parallel between a middle point and a negative terminal of the half-bridge circuit 204 to form a preceding-stage port of the front end circuit 2 of the unidirectional DC voltage conversion device. A bus capacitor 202 is connected in parallel between a positive terminal and a negative terminal of the half-bridge circuit 204 to form a subsequent-stage port of the front end circuit 2 of the unidirectional DC voltage conversion device.

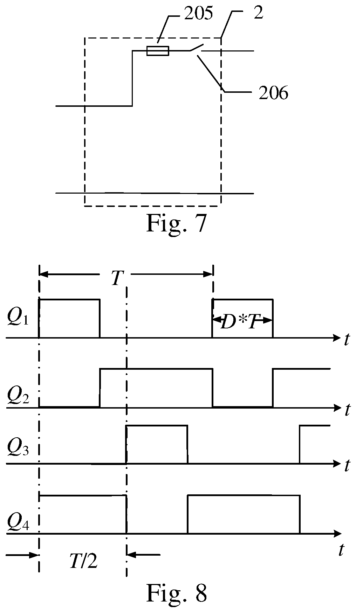

Fig. 7 is a structural block diagram of a front end circuit based on the series connection of a fuse and an isolation switch.

Optionally, as shown in Fig. 7, a fuse 205 and an isolation switch 206 are connected in series between a positive terminal of the preceding-stage port and a positive terminal of the subsequent-stage port of the front end circuit 2 of the unidirectional DC voltage conversion device, and a negative terminal of the preceding-stage port and a negative terminal of the subsequent-stage port are directly connected by wires.

The embodiments of the present application provide a method for controlling the unidirectional DC voltage conversion device as described above. During normal operation, the following first driving pulse control method is adopted to control the fully-controlled H-bridge circuit of the main power circuit of the unidirectional DC voltage conversion device:
controlling the driving pulses of the fully-controlled switching elements of the upper bridge arms and the lower bridge arms of the first half-bridge and the second half-bridge to be in a complementary conduction state, and the driving pulse duty ratios D of the fully-controlled switching elements of the upper bridge arms of the first half-bridge and the second half-bridge to be the same with an interleaving angle of 180°, wherein D is a controlled variable with a variation range of 0-1. The driving pulse control method is defined as a first drive control method.

Fig. 8 is a diagram of a switching tube driving waveform of a first driving control method scheme.

As shown in Fig. 8 which is a driving pulse diagram of four switching tubes of the fully-controlled H-bridge under the first driving pulse control method, T represents a switching cycle, Q₁ and Q₂ represent driving pulses of upper and lower tubes of the first half-bridge respectively, Q₃ and Q₄ represent driving pulses of upper and lower tubes of the second half-bridge respectively, D^{∗}T is the opening time of two upper tubes in one switching cycle, and D is adjustable.

The embodiments of the present application provide another method for controlling the unidirectional DC voltage conversion device as described above. During normal operation, the following second driving pulse control method is adopted to control the fully-controlled H-bridge circuit of the main power circuit of the unidirectional DC voltage conversion device:
controlling the driving pulses of the fully-controlled switching elements of the upper bridge arms and the lower bridge arms of the first half-bridge and the second half-bridge to be in a complementary conduction state, and the driving pulse duty ratios of the fully-controlled switching elements of the upper bridge arms of the first half-bridge and the second half-bridge to both stay constant at 0.5 with an interleaving angle of θ, wherein the interleaving angle θ is a phase shift angle, and θ is a controlled variable with a variation range of 0-180°.

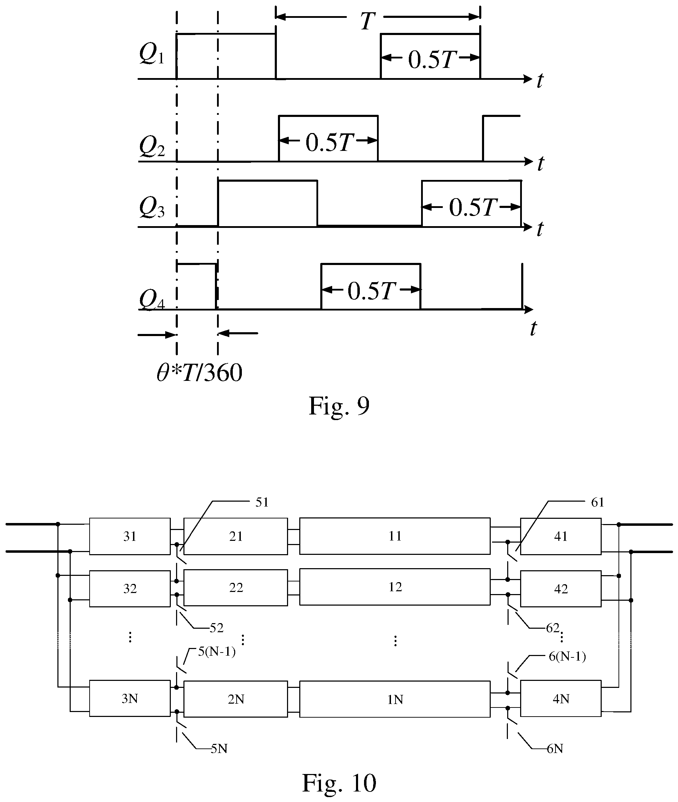

Fig. 9 is a diagram of a switching tube driving waveform of a second driving control method scheme.

As shown in Fig. 9 which is a driving pulse diagram of four switching tubes of the fully-controlled H-bridge under the second driving pulse control method, T represents a switching cycle, Q₁ and Q₂ represent driving pulses of upper and lower tubes of the first half-bridge respectively, Q₃ and Q₄ represent driving pulses of upper and lower tubes of the second half-bridge respectively, *θ*^{∗}*T*/360 is the time difference between the opening times of two upper tubes, and θ is adjustable.

Fig. 10 is a structural block diagram of a system composed of a plurality of unidirectional DC voltage conversion devices disclosed in the present application.

As shown in Fig. 10, when N unidirectional DC voltage conversion devices are used to form a high-voltage or high-power unidirectional DC voltage conversion system, N is any positive integer greater than or equal to 2, and all the unidirectional DC voltage conversion devices are connected as follows:
the second input ports of all the unidirectional DC voltage conversion devices are all connected in parallel, and the second output ports of all the unidirectional DC voltage conversion devices are all connected in parallel;
the first input ports of all the unidirectional DC voltage conversion devices are sequentially connected in series, that is, a negative terminal of the first input port of a first device is connected to a positive terminal of the first input port of a second device, and so on, and a positive terminal of the first device and a negative terminal of the N^{th} device are suspended; and
the first output ports of all the unidirectional DC voltage conversion devices are sequentially connected in series, that is, a negative terminal of the first output port of the first device is connected to a positive terminal of the first output port of the second device, and so on, and a positive terminal of the first device and a negative terminal of the N^{th} device are suspended.

As shown in Fig. 10, components 11, 21, 31, 41, 51 and 61 are respectively the main power circuit, the front end circuit, the preceding-stage switch circuit, the subsequent-stage switch circuit, the preceding-stage auxiliary isolation switch and the subsequent-stage auxiliary isolation switch of the first unidirectional DC voltage conversion device; components 12, 22, 32, 42, 52 and 62 are respectively the main power circuit, the front end circuit, the preceding-stage switch circuit, the subsequent-stage switch circuit, the preceding-stage auxiliary isolation switch and the subsequent-stage auxiliary isolation switch of the second unidirectional DC voltage conversion device; and by analogy, components 1N, 2N, 3N, 4N, 5N and 6N are respectively the main power circuit, the front end circuit, the preceding-stage switch circuit, the subsequent-stage switch circuit, the preceding-stage auxiliary isolation switch and the subsequent-stage auxiliary isolation switch of the N^{th} unidirectional DC voltage conversion device.

The preceding-stage ports of the components 31 to 3N are connected in parallel, and the subsequent-stage ports of the components 41 to 4N are connected in parallel. Component 51 and component 61 are preceding-stage and subsequent-stage auxiliary isolation switches of the first unidirectional DC voltage conversion device, which are connected to a positive pole of the first input port and a positive pole of the first output port of the second unidirectional DC voltage conversion device respectively, and so on; and component 5N and component 6N are preceding-stage and subsequent-stage auxiliary isolation switches of the N^{th} unidirectional DC voltage conversion device, which are suspended.

When N unidirectional DC voltage conversion devices are used to form a unidirectional DC voltage conversion system, and N is any positive integer greater than or equal to 2, the unidirectional DC voltage conversion system comprises a driving pulse interleaving control mechanism, that is,
sequentially interleaving the driving pulses of switching tubes corresponding to the first half-bridges of each unidirectional DC voltage conversion device by 360°/N.

When the unidirectional DC voltage conversion device has a short-term fault, the following control procedure is adopted:
detecting the working state of the unidirectional DC voltage conversion device in real time, and if a fault occurs, locking the pulse drive of four switching tubes of the fully-controlled H-bridge circuit of the unidirectional DC voltage conversion device at the same time for fault isolation; and after the fault is eliminated, unlocking the pulse drive of the four switching tubes of the fully-controlled H-bridge circuit to realize fault ride-through.

When the unidirectional DC voltage conversion device has a permanent fault, the following control procedure is adopted:
detecting the working state of the unidirectional DC voltage conversion device in real time, and if a fault occurs, locking the pulse drive of four switching tubes of the fully-controlled H-bridge circuit of the unidirectional DC voltage conversion device at the same time for fault isolation; and if the fault cannot be eliminated, changing the working state of the preceding-stage switch circuit and the subsequent-stage switch circuit to realize permanent fault isolation.

In the present embodiment, a driving pulse interleaving control method for multiple devices is proposed, which can solve the problem of large voltage pulsation of the output capacitor caused by uncontrolled diode rectification, significantly reduce the voltage and current ripple amplitude at an output side of the device, improve the ripple frequency and reduce the design requirements for an output filter.

In order to quantitatively explain the regulation principle of this patent, the application method of this patent is introduced by an example below.

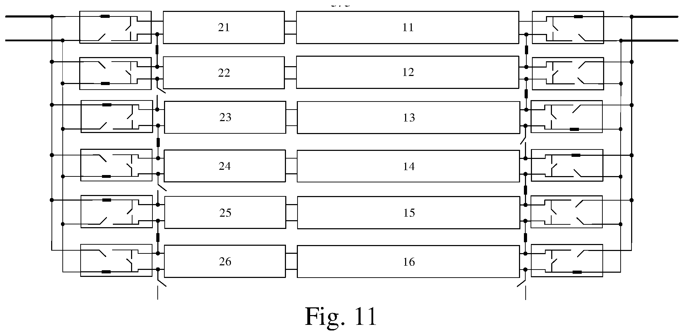

Fig. 11 is a structural block diagram of a unidirectional DC voltage conversion system with two series and three parallel input ports and three series and two parallel output ports.

As shown in Fig. 11, N=6, that is, there are six unidirectional voltage conversion devices, and M=2 for each device, that is, each bridge arm of the uncontrolled H-bridge circuit comprises two diodes connected in series. Component 11 and component 21 are respectively the main power circuit and the front end circuit of the first unidirectional DC voltage conversion device; component 12 and component 22 are respectively the main power circuit and the front end circuit of the second unidirectional DC voltage conversion device; and by analogy, component 16 and component 26 are respectively the main power circuit and the front end circuit of the sixth unidirectional DC voltage conversion device.

By closing the preceding-stage positive isolation switches and the preceding-stage auxiliary isolation switches of the preceding-stage switch circuits of the first, third and fifth unidirectional voltage conversion devices, closing the negative isolation switches of the preceding-stage switch circuits of the second, fourth and sixth unidirectional voltage conversion devices, and opening all the other switches, a structure that six unidirectional voltage conversion devices are on an input side, and that every two devices are connected in series and then connected in parallel is realized; and

by closing the subsequent-stage auxiliary isolation switches of the first, second, fourth and fifth unidirectional voltage conversion devices, closing the positive isolation switches of the subsequent-stage switch circuits of the first and fourth unidirectional voltage conversion devices, closing the negative isolation switches of the subsequent-stage switch circuits of the third and sixth unidirectional voltage conversion devices, and opening all the other switches, a structure that six unidirectional voltage conversion devices are on an output side, and that every three devices are connected in series and then connected in parallel is realized.

Assuming that the voltage stress and current stress of all switching elements are Umax and Imax respectively, the voltage safety margin coefficient is kv which is between 1.5 and 2, and the current safety margin coefficient is ka which is between 1.5 and 2, then the voltage stress can be 2 Umax/kv and the current stress can be 3 Imax/ka achieveable at the input side and 3 Umax/kv and 2 Imax/ka achieveable at the output side.

According to this idea, unidirectional voltage conversion systems with different voltage stresses and different power levels can be realized by giving different values to N and M. Therefore, the problem of small ice melting range of a voltage source converter can be solved by the present application.

In the unidirectional DC voltage conversion device in the present application, the fully-controlled H-bridge circuits are provided to realize closed-loop high-precision control; the uncontrolled H-bridge circuits comprising diodes connected in series are provided to improve the voltage level of the output port through serial connection of the diodes; the switch circuits, the front end circuit, the auxiliary isolation switches and other parts are provided to realize multi-module series-parallel combination; and as a result, the requirement for a wider working range is met without increasing too much cost.

When multiple devices are required to be connected in parallel and series combinations to realize the application of high voltage levels and high power levels, the input ports and output ports of the unidirectional DC voltage conversion devices are connected in parallel; and by changing the working state of the switch circuits, the front end circuit and the auxiliary isolation switches, the parallel and series functions of multiple subunits of the input ports and output ports are realized.

It should be noted that the embodiments described above with reference to the drawings are only used to illustrate the present application, but not to limit the scope of the present application. Those of ordinary skill in the art should understand that modifications or equivalent substitutions made to the present application without departing from the spirit and scope of the present application should be covered within the scope of the present application. In addition, unless otherwise specified in the context, words appearing in the singular form include the plural form, and vice versa. In addition, all or part of any embodiment can be used in combination with all or part of any other embodiment unless otherwise specified.

## Claims

1. A unidirectional DC voltage conversion device, comprising:
a front end circuit;
a main power circuit, having a preceding-stage port forming a cascade connection with a subsequent-stage port of the front end circuit;
a preceding-stage auxiliary isolation switch connected to a negative terminal of a preceding-stage port of the front end circuit, and forming, together with a positive terminal of the preceding-stage port of the front end circuit, a first input port of the unidirectional DC voltage conversion device; and
a subsequent-stage auxiliary isolation switch connected to a negative terminal of a subsequent-stage port of the main power circuit, and forming, together with a positive terminal of the subsequent-stage port of the main power circuit, a first output port of the unidirectional DC voltage conversion device.

2. The unidirectional DC voltage conversion device according to claim 1, further comprising:
a preceding-stage switch circuit, having a preceding-stage port being a second input port of the unidirectional DC voltage conversion device and comprising an input positive terminal and an input negative terminal, and a subsequent-stage port forming a cascade connection with the preceding-stage port of the front end circuit; and
a subsequent-stage switch circuit, having a preceding-stage port forming a cascade connection with the subsequent-stage port of the main power circuit, and a subsequent-stage port being a second output port of the unidirectional DC voltage conversion device and comprising an output positive terminal and an output negative terminal.

3. The unidirectional DC voltage conversion device according to claim 2, wherein the preceding-stage switch circuit comprises:
a preceding-stage bypass switch, having two ends forming the subsequent-stage port of the preceding-stage switch circuit;
a preceding-stage positive isolation switch, having one end connected to one end of the preceding-stage bypass switch; and
a preceding-stage negative isolation switch, having one end connected to another end of the preceding-stage bypass switch, and another end, together with another end of the preceding-stage negative isolation switch, forming the preceding-stage port of the preceding-stage switch circuit.

4. The unidirectional DC voltage conversion device according to claim 2, wherein the subsequent-stage switch circuit comprises:
a subsequent-stage bypass switch, having two ends forming the preceding-stage port of the subsequent-stage switch circuit;
a subsequent-stage positive isolation switch, having one end connected to one end of the subsequent-stage bypass switch; and
a subsequent-stage negative isolation switch, having one end connected to another end of the subsequent-stage bypass switch, and another end, together with another end of the subsequent-stage negative isolation switch, forming the subsequent-stage port of the subsequent-stage switch circuit.

5. The unidirectional DC voltage conversion device according to any one of claims 1-4, wherein the main power circuit comprises:
a high-frequency transformer comprising a primary winding and a secondary winding;
a fully-controlled H-bridge circuit, having an AC side connected to the primary winding of the high-frequency transformer, the fully-controlled H-bridge circuit comprising a first half-bridge and a second half-bridge, and a bridge arm of each of said first and second half-bridges comprising a fully-controlled switching element;
a resonant part connected in series to the primary winding or the secondary winding of the high-frequency transformer;
an uncontrolled H-bridge circuit, having an AC side connected to the secondary winding of the high-frequency transformer, the uncontrolled H-bridge circuit comprising a third half-bridge and a fourth half-bridge, wherein an upper bridge arm and a lower bridge arm of each of said third and fourth half-bridges each comprise M diodes connected in series, and M is any positive integer greater than or equal to 2;
an input capacitor connected in parallel to a DC side of the fully-controlled H-bridge circuit to form the preceding-stage port of the main power circuit; and
an output capacitor connected in parallel to a DC side of the uncontrolled H-bridge circuit to form the subsequent-stage port of the main power circuit.

6. The unidirectional DC voltage conversion device according to claim 5, wherein the front end circuit comprises:
a full-bridge circuit comprising four fully-controlled switching elements;
a bypass isolation switch connected in parallel to an AC side of the full-bridge circuit to form the preceding-stage port of the front end circuit; and
a bus capacitor connected in parallel to a DC side of the full-bridge circuit to form the subsequent-stage port of the front end circuit.

7. The unidirectional DC voltage conversion device according to claim 5, wherein the front end circuit comprises:
a half-bridge circuit comprising two fully-controlled switching elements;
a bypass isolation switch connected in parallel between a middle point and a negative terminal of the half-bridge circuit to form the preceding-stage port of the front end circuit; and
a bus capacitor connected in parallel between a positive terminal and a negative terminal of the half-bridge circuit to form the subsequent-stage port of the front end circuit.

8. The unidirectional DC voltage conversion device according to claim 5, further comprising:
a fuse and an isolation switch connected in series, wherein the fuse and the isolation switch are connected between a positive terminal of the preceding-stage port and a positive terminal of the subsequent-stage port of the front end circuit, and a negative terminal of the preceding-stage port and a negative terminal of the subsequent-stage port of the front end circuit are directly connected by wires.

9. A unidirectional DC voltage conversion device, comprising two input ports and two output ports and comprising a preceding-stage switch circuit, a front end circuit, a main power circuit, a subsequent-stage switch circuit, a preceding-stage auxiliary isolation switch and a subsequent-stage auxiliary isolation switch, wherein
each of the preceding-stage switch circuit, the front end circuit, the main power circuit and the subsequent-stage switch circuit is a two-port circuit, and preceding-stage and subsequent-stage ports of the circuits form a cascade connection in sequence;
a preceding-stage port of the preceding-stage switch circuit is a second input port of the unidirectional DC voltage conversion device, and comprises an input positive terminal and an input negative terminal; a subsequent-stage port of the subsequent-stage switch circuit is a second output port of the unidirectional DC voltage conversion device, and comprises an output positive terminal and an output negative terminal;
when a subsequent stage of the preceding-stage switch circuit and a preceding stage of the front end circuit form a cascade connection, a negative terminal of the port is connected to the preceding-stage auxiliary isolation switch and forms, together with a positive terminal, a first input port of the unidirectional DC voltage conversion device; and when a subsequent stage of the main power circuit and a preceding stage of the subsequent-stage switch circuit form a cascade connection, a negative terminal of the port is connected to the subsequent-stage auxiliary isolation switch and forms, together with a positive terminal, a first output port of the unidirectional DC voltage conversion device.

10. A method for controlling the unidirectional DC voltage conversion device according to any one of claims 1-8, comprising:
during normal operation, adopting a first driving pulse control strategy to control the fully-controlled H-bridge circuit of the main power circuit of the unidirectional DC voltage conversion device, wherein the first driving pulse control strategy comprises:
controlling driving pulses of the fully-controlled switching elements of the upper bridge arms and the lower bridge arms of the first half-bridge and the second half-bridge to be in a complementary conduction state, and controlling driving pulse duty ratios D of the fully-controlled switching elements of the upper bridge arms of the first half-bridge and the second half-bridge to be the same with an interleaving angle of 180°, wherein D is a controlled variable with a variation range of 0-1.

11. A method for controlling the unidirectional DC voltage conversion device according to any one of claims 1-8, comprising:
during normal operation, adopting a second driving pulse control strategy to control the fully-controlled H-bridge circuit of the main power circuit of the unidirectional DC voltage conversion device, wherein the second driving pulse control strategy comprises:
controlling driving pulses of the fully-controlled switching elements of the upper bridge arms and the lower bridge arms of the first half-bridge and the second half-bridge to be in a complementary conduction state, and controlling driving pulse duty ratios of the fully-controlled switching elements of the upper bridge arms of the first half-bridge and the second half-bridge to both stay constant at 0.5 with an interleaving angle of θ, wherein the interleaving angle θ is a phase shift angle, and θ is a controlled variable with a variation range of 0-180°.

12. A unidirectional DC voltage conversion system, comprising:
N unidirectional DC voltage conversion devices according to any one of claims 1-8, wherein N is any positive integer greater than or equal to 2; wherein
the second input ports of the N unidirectional DC voltage conversion devices are connected in parallel, and the second output ports of the N unidirectional DC voltage conversion devices are connected in parallel;
the first input ports of the N unidirectional DC voltage conversion devices are sequentially connected in series, wherein a negative terminal of the first input port of each said device is connected to a positive terminal of the first input port of the next adjacent device, and a positive terminal of the first device and a negative terminal of the N^{th} device are suspended; and
the first output ports of the N unidirectional DC voltage conversion devices are sequentially connected in series, wherein a negative terminal of the first output port of each device is connected to a positive terminal of the first output port of the next adjacent device, and a positive terminal of the first device and a negative terminal of the N^{th} device are suspended.

13. A method for controlling the unidirectional DC voltage conversion system according to claim 12, comprising:
adopting a driving pulse interleaving control mechanism to sequentially interleave driving pulses of the fully-controlled switching elements corresponding to the first half-bridges of each said unidirectional DC voltage conversion device by 360°/N.

14. The control method according to claim 13, further comprising:
when the unidirectional DC voltage conversion device has a short-term fault, locking the pulse drive of the four fully-controlled switching elements of the fully-controlled H-bridge circuit of the unidirectional DC voltage conversion device at the same time for fault isolation; and
after the fault is eliminated, unlocking the pulse drive of the four fully-controlled switching elements of the fully-controlled H-bridge circuit to realize fault ride-through.

15. The control method according to claim 13, further comprising:
when the unidirectional DC voltage conversion device has a permanent fault, locking the pulse drive of the four fully-controlled switching elements of the fully-controlled H-bridge circuit of the unidirectional DC voltage conversion device at the same time for fault isolation; and
if the fault cannot be eliminated, changing working state of the preceding-stage switch circuit and the subsequent-stage switch circuit to realize permanent fault isolation.
